# EUROPEAN PATENT SPECIFICATION

(11) **EP 0 318 244 B1**
(45) Date of publication and mention of the grant of the patent: **19.04.1995**
(21) Application number: 88311034.8
(22) Date of filing: 22.11.1988
(51) Int. Cl.: H04N 7/24

(54) **Image information transmission apparatus**
Vorrichtung zum Übertragen einer Bildinformation
Dispositif pour la transmission de l'information d'image

(30) Priority: 27.11.1987 JP 297404/87; 27.11.1987 JP 297405/87; 27.11.1987 JP 297409/87; 27.11.1987 JP 297410/87
(43) Date of publication of application: 31.05.1989
(73) Proprietor: CANON KABUSHIKI KAISHA, Tokyo (JP)
(72) Inventor: Ishii, Yoshiki, Yokohama-shi Kanagawa-ken (JP); Shimokoriyama, Makoto, Kawasaki-shi Kanagawa-ken (JP); Shimizu, Tetsuya, Yokohama-shi Kanagawa-ken (JP); Yoshimura, Katsuji, Hamamatsu-shi Shizuoka-ken (JP); Fujii, Akio, Yokohama-shi Kanagawa-ken (JP); Sasatani, Tomohiko, Yokohama-shi Kanagawa-ken (JP)
(74) Representative: Beresford, Keith Denis Lewis

(56) References cited:
- EP-A- 0 186 444
- US-A- 4 703 352
- Dissertation von H.-W. KEESEN (Institute of Technology, Aachen): "Die Blockkompandierung digitaler Fernsehsignale", 22nd May 1984, pages 1-81

## Description

### BACKGROUND OF THE INVENTION:

### Field of the Invention

The present invention relates to an image information transmission apparatus for transmitting image data as a block code.

### Related Background Art

A typical conventional encoding scheme for reducing the mean number of bits per sampling frequency or per pixel is known as a method of reducing a transmission band of a television signal. In the scheme for reducing the mean number of bits per sampling frequency, the image data are interlaced into a half by sampling, and sampling points and a flag representing positions of sampling points used for interpolation (i.e., a flag representing use of data of upper and lower or right and left sub-sampling points of the interpolation point) are transmitted.

A typical example of the scheme for reducing the mean number of bits per pixel is a block encoding scheme for segmenting a screen of one field into small blocks and encoding is performed in units of blocks (e.g., US-A- 4,703,352). For example, a difference between minimum and maximum values of a block of interest is linearly or nonlinearly quantized. An index representing a quantization level to which each pixel belongs is transmitted, and the minimum and maximum values are transmitted as scale components.

In this block encoding scheme, encoding is performed on the basis of the dynamic range of intrablock pixel values. However, if an extreme contrast difference is present within a block, or a boundary is included in a block, so that a distribution of pixel values is greatly different from that of an assumed state, large distortion occurs in a decoded signal.

With a view to mitigating at least some of the above problems, the invention provides an image encoding apparatus comprising: blocking means for dividing pixels of an image to be encoded into a plurality of pixel blocks; means for identifying a dynamic range of the pixel values in each block; means for determining a set of quantisation levels for the block dependent on the identified dynamic range; means for encoding the individual pixel values of the block in accordance with the quantisation levels; and means for generating output data including the encoded pixel values for the block together with reference value data representing the identified dynamic range for the block, characterised in that the determination of the quantisation levels for at least some blocks is further adapted in accordance with the distribution of pixel values within the dynamic range, and in that the output data further includes distribution state data characterising said distribution, so as to permit decoding in a correspondingly adapted manner.

By enabling the encoding method to be adapted to the actual distribution of pixel values within the dynamic range of a pixel block, the invention permits a more efficient encoding, such that image degradation is reduced at a given level of compression. One embodiment of an apparatus according to the invention further comprises means for calculating a mean value of the pixel data in the block, which mean value is encoded within the distribution state data. The means for determining the set of quantisation levels for the block divides a sub-range between the minimum and the mean value of the block into a predetermined number of quantisation steps, and divides a sub-range between the mean value and the maximum value for the block into a predetermined number of quantisation steps. Thus, for blocks where the pixel values are concentrated near one extreme of the dynamic range or the other, this embodiment ensures that more quantisation levels are more densely assigned in part of the dynamic range. In another embodiment, the dynamic range is divided into four sub-ranges according to the distribution of the pixel values in the block, and each of these sub-ranges is divided into a predetermined number of quantisation steps.

The embodiments of the invention are also disclosed in which for some blocks encoding is performed without reference to the distribution of pixel values within the dynamic range, while for other blocks encoding is performed as described above. The resulting code length may be different depending on which type of coding is employed, while in other embodiments the encoding means is arranged to maintain a constant code length per block, irrespective of whether distribution state data is included.

The invention further provides an apparatus for decoding image data encoded by an apparatus according to the invention as set forth above, the decoding apparatus comprising means for separating individual encoded pixel data for each block from reference value data encoding a dynamic range of pixel values within that block and distribution state data characterising the distribution of pixel values within the encoded dynamic range, means for identifying from said reference value data and distribution state of data an encoding method used in the encoding of the individual pixel values, and means for decoding the individual pixel values in accordance with the identified encoding method.

The invention further provides a signal including image data which have been encoded by an apparatus according to the invention as set forth above, the image data including at least for some blocks of pixels distribution state data in addition to reference value data.

Other embodiments of the invention are defined in the appended claims.

The above and other objects, features, and advantages of the present invention will be apparent from the following detailed description of exemplary embodiments in conjunction with the accompanying drawings.
Fig. 1 is a schematic block diagram showing a television signal encoding apparatus which employs the present invention according to a first embodiment of the present invention;
Fig. 2 is a detailed diagram showing an encoder 24 shown in Fig. 1;
Fig. 3 is a view for explaining a quantization step;
Fig. 4 is a view showing an output code series from an encoder 22 shown in Fig. 1;
Fig. 5 is a schematic diagram showing a decoding apparatus corresponding to the encoding apparatus shown in Fig. 1;
Fig. 6 is a detailed diagram of a decoder 34 shown in Fig. 5;
Fig. 7 is a schematic diagram of a television signal encoding apparatus which employs the present invention according to a second embodiment;
Fig. 8 is a detailed diagram of an encoder 206 shown in Fig. 7;
Fig. 9 is a schematic diagram of a decoding apparatus corresponding to the encoding apparatus shown in Fig. 7;
Fig. 10 is a detailed diagram of a decoder 239 shown in Fig. 9;
Fig. 11 is a view for explaining a quantization range corresponding to an intrablock pixel distribution;
Fig. 12 is a view showing an output code series from an encoder 205 in Fig. 7;
Fig. 13 is a schematic diagram of a television signal encoding apparatus which employs the present invention according to a third embodiment;
Fig. 14 is a detailed diagram of an encoder 269 shown in Fig. 13;
Figs. 15(a) to 15(c) are views showing encoding ranges of the encoding apparatus shown in Fig. 13;
Fig. 16 is a detailed diagram showing an encoding element 272 shown in Fig. 14;
Fig. 17 is a detailed diagram of an encoder 268 shown in Fig. 13;
Figs. 18(a) to 18(c) are views showing output code series from the encoder 268 in Fig. 13;
Fig. 19 is a schematic diagram of a decoder corresponding to the encoding apparatus shown in Fig. 13;
Fig. 20 is a detailed diagram of a decoder 307 shown in Fig. 19;
Fig. 21 is a detailed diagram showing a decoding element 311 shown in Fig. 20;
Fig. 22 is a schematic diagram showing a television signal encoding apparatus which employs the present invention according to a fourth embodiment;
Figs. 23(a) and 23(b) are views showing encoding ranges of the encoding apparatus shown in Fig. 22;
Fig. 24 is a view showing output code series from a data series forming circuit 332 shown in Fig. 22;
Figs. 25 (a) and 25(b) are detailed views showing as converter 326 in Fig. 22;
Fig. 26 is a schematic view showing a decoding apparatus corresponding to the encoding apparatus shown in Fig. 22;
Fig. 27 is a detailed view showing a decoding circuit 341 in Fig. 26;
Fig. 28 is a detailed view showing a restoration circuit 343 in Fig. 27; and
Fig. 29 is a detailed view showing a restoration circuit 344 in Fig. 27.

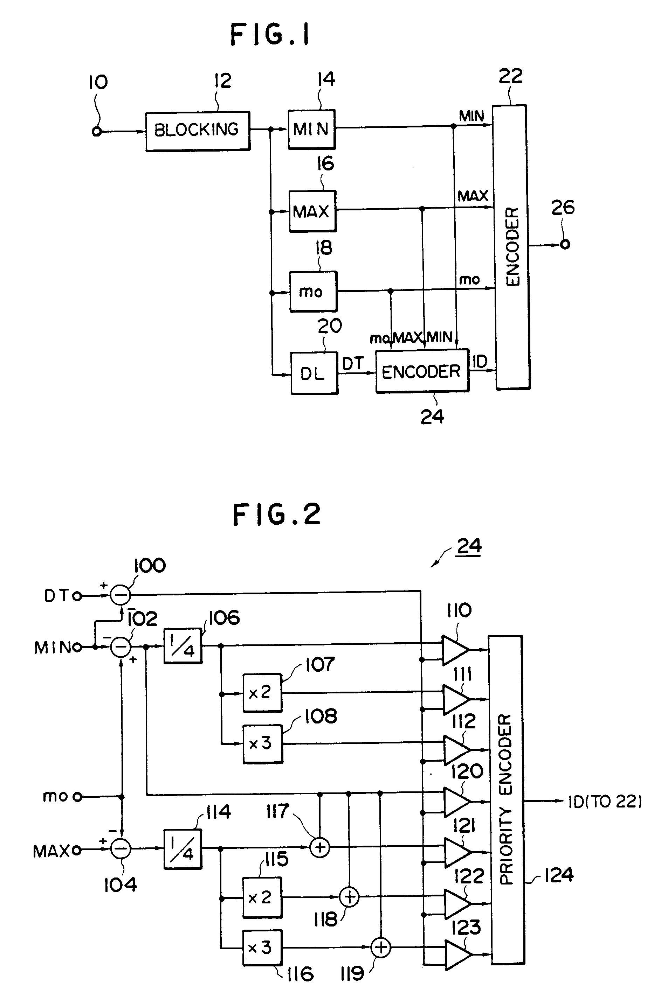

Fig. 1 is a block diagram showing a television signal encoding apparatus according to a first embodiment of the present invention. A digital image signal is input to an input terminal 10. In this embodiment, an NTSC television signal quantized as 8 bits/sample is actually input to the input terminal 10. A blocking circuit 12 receives the signal input from the input terminal 10 in units of horizontal scanning lines, edits the signals in a scanning order in units of horizontal scanning lines, and outputs the edited signals. In this embodiment, one block comprises four samples in the horizontal direction and four lines in the vertical direction. The sample series rearranged by the blocking circuit 12 is input to a minimum value detector (MIN) 14, a maximum value detector (MAX) 16, and an intrablock mean value detector (m₀) 18, and a delay circuit (DL) 20. An output MIN from the minimum value detector 14, an output MAX from the maximum value detector 16, and an output m₀ from the mean value detector 18 are input to encoders 22 and 24.

A sample value DT from the delay circuit 20 is applied to the encoder 24. The encoder 24 generates a 3-bit index ID to the encoder 22. The index ID represents a correspondence of the input sample value and one of the quantization steps defined by the maximum value MAX, the minimum value MIN, and the mean value m₀. This will be described in detail later.

Fig. 2 is a detailed diagram showing the encoder 24. In this embodiment, a difference between the minimum value MIN and the mean value m₀ is divided into four areas, and a difference between the mean value m₀ and the maximum value MAX is divided into four areas (a total of eight areas). Intrablock sample values DT are assigned to the eight areas, and the 3-bit index ID is output. A subtracter 100 subtracts the minimum value MIN from the sample value DT, a subtracter 102 subtracts the minimum value MIN from the mean value m₀, and a subtracter 104 subtracts the mean value m₀ from the maximum value MAX. An output (m₀ - MIN) from the subtracter 102 is supplied to one input of a comparator 120 and is divided into a 1/4 value by a divider 106. The 1/4 value is supplied to multipliers 107 and 108 and a comparator 110. The multipliers 107 and 108 multiply input signals with 2 and 3, and the multiplied signals are applied to comparators 111 and 112, respectively. An output (MAX - m₀) from the subtracter 104 is divided into a 1/4 value by a divider 114. The 1/4 value is applied to multipliers 115 and 116 and an adder 117. The multipliers 115 and 116 multiply the input signals with 2 and 3, and the multiplied signals are applied to adders 118 and 119, respectively. The output from the subtracter 102 is applied to the adders 117, 118, and 119, and each of the sum signals therefrom is input to one input of a corresponding one of comparators 121, 122, and 123. An output DT′ (= DT - MIN) from the subtracter 100 is input to the other input of each of the comparators 110 to 112, and 120 to 123.

If outputs from the comparators 110 to 112 and 120 to 123 are defined as C1 to C7, the outputs C1 to C7 are input to a priority encoder 124 in the following cases:
(1) If 0 ≦ DT′ < (1/4)(m₀ - MIN),
   C1 = C2 = C3 = C4 = C5 = C6 = C7 = 0
(2) If (1/4) (m₀ - MIN) ≦ DT′ < (2/4) (m₀ - MIN),
   C1 = 1, C2 = C3 = C4 = C5 = C6 = C7 = 0
(3) If (2/4) (m₀ MIN) ≦ DT′ < (3/4) (m₀ MIN),
   C1 = C2 = 1, C3 = C4 = C5 = C6 = C7 = 0
(4) If (3/4) (m₀ - MIN) ≦ DT′ < (m₀ - MIN),
   C1 = C2 = C3 = 1, C4 = C5 = C6 = C7 = 0
(5) If (m₀ - MIN) ≦ DT′ < (1/4)(MAX - m₀) + (m₀ - MIN),
   C1 = C2 = C3 = C4 = 1, C5 = C6 = C7 = 0
(6) If (1/4)(MAX - m₀) + (m₀ - MIN) ≦ DT′ < (2/4)(MAX - m₀) + (m₀ - MIN),
   C1 = C2 = C3 = C4 = C5 = 1, C6 = C7 = 0
(7) If (2/4)(MAX - m₀) + (m₀ MIN) ≦ DT′ < (3/4)(MAX - m₀) + (m₀ - MIN),
   C1 = C2 = C3 = C4 = C5 = C6 = 1, C7 = 0
(8) If (3/4) (MAX - m₀) + (m₀ - MIN) ≦ DT′ < (MAX - MIN),
   C1 = C2 = C3 = C4 = C5 = C6 = C7 = 1

More specifically, the priority encoder 124 outputs a 3-bit index ID, i.e., (000) for condition (1), (001) for condition (2), (010) for condition (3), (011) for condition (4), (100) for condition (5), (101) for condition (6), (110) for condition (7), and (111) for condition (8). The output from the priority encoder 124 is applied to the encoder 22.

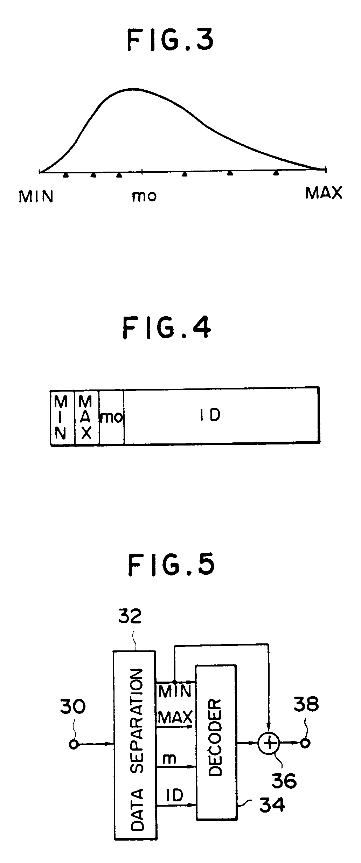

The encoder 22 outputs the minimum value MIN, the maximum value MAX, the mean value m₀ and the index ID of each block as transmission units in a transmission format (Fig. 4) onto a transmission line (not shown) from an output terminal 26.

Fig. 5 is a schematic diagram showing a digital television signal decoding apparatus corresponding to the encoding apparatus shown in Fig. 1. A digital television signal input from a transmission line (not shown) is input to a data separation circuit 32 from an input terminal 30. The data separation circuit 32 separates the additional codes MIN, MAX, and m₀ and the coded code ID and supplies separated data to a decoder 34. The decoder 34 outputs a pixel value corresponding to a difference between the actual pixel value and the minimum (MIN) level in a block. An adder 36 adds an output from the decoder 34 to the minimum value MIN, and the sum signal appears at an output terminal 38. Therefore, each pixel value appears at the output terminal 38.

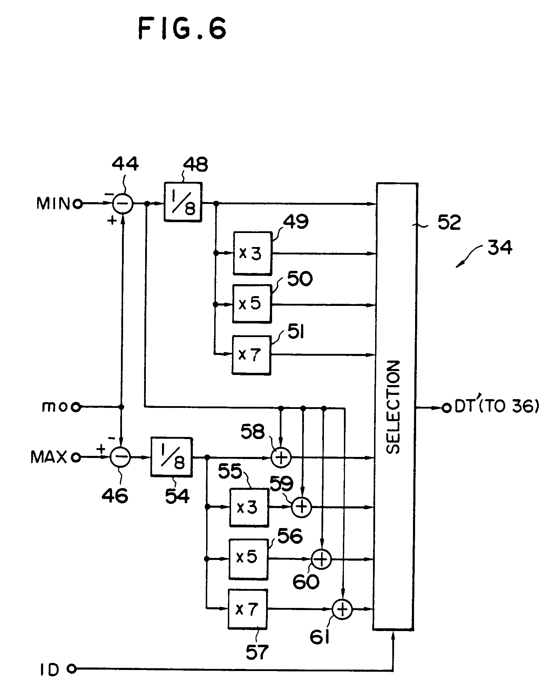

Fig. 6 is a detailed diagram of the decoder 34. A subtracter 44 calculates a difference between the mean value m₀ and the minimum value MIN, and a subtracter 46 calculates a difference between the maximum value MAX and the mean value m₀. A divider 48 divides the output (m₀ - MIN) from the subtracter 44 by eight, and a quotient output is supplied to multipliers 49, 50, and 51 and a selection circuit 52. The multipliers 49, 50, and 51 multiply the input signals with 3, 5, and 7, and the multiplied signals are supplied to the selection circuit 52. A divider 54 divides the output (MAX - m₀) from the subtracter 46 to produce a 1/8 value, and the resultant quotient is supplied to multipliers 55, 56, and 57. The multipliers 55, 56, and 57 multiply the input signals with 3, 5, and 7, and the multiplied signals are applied to adders 59, 60, and 61, respectively. The adders 58 to 61 add the outputs from the divider 54 and the multipliers 55 to 57 to the output (m₀ - MIN) from the subtracter 44, and the sum signals are supplied to the selection circuit 52. The selection circuit 52 selects and outputs one of the inputs "(1/8) (m₀ - MIN)", "(3/8)(m₀ - MIN)", "(5/8) (m₀ - MIN)", "(7/8) (m₀ - MIN)", "(1/8)(MAX - m₀) + (m₀ - MIN)", "(3/8)(MAX - m₀) + (m₀ - MIN)", "(5/8)(MAX - m₀) + (m₀ - MIN)", and "(5/8)(MAX - m₀) + (m₀ MIN)". The selected output is applied to the adder 36.

According to this embodiment as described above, the digital television signal is encoded in accordance with the distribution of levels of the sample values within the divided block. Even if a volume of information is small, encoding and data transmission can be performed with minimum image degradation.

In this embodiment, when the data MIN, MAX and m₀ are transmitted as 8-bit data, respectively, and the data ID is transmitted as 3-bit data, one block (i.e., 16 samples) can be transmitted by 72 bits. As compared with a case wherein each of the 16 samples is transmitted by 8 bits, a high compression ratio of 72/128 can be achieved. In this embodiment, the index ID, and the values MIN, MAX, and m₀ are transmitted. However, a dynamic range DR may be transmitted with one of the values MIN and MAX.

In the encoding apparatus of this embodiment, encoding is performed in consideration of the dynamic range and the distribution of the pixels within the block. Therefore, even a pixel block including a boundary of an image can be encoded and transmitted without causing distortion.

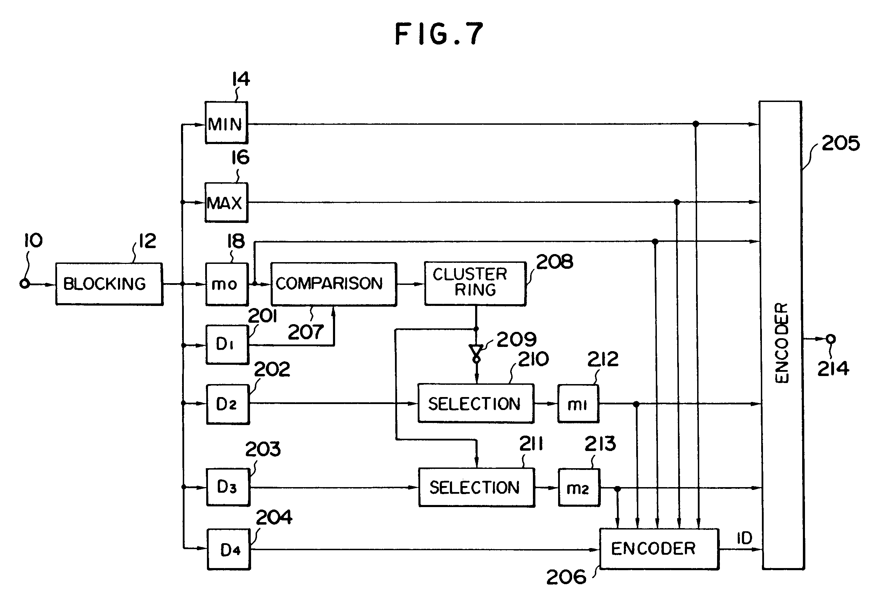

Fig. 7 is a block diagram of a television signal encoding apparatus according to a second embodiment of the present invention. The same reference numerals as in Fig. 1 denote the same parts in Fig. 7, and a detailed description thereof will be omitted.

This encoding apparatus includes an input terminal 10 for receiving a digital image signal and a blocking circuit 12. A sample series rearranged by the blocking circuit 12 is applied to a minimum value detector 14, a maximum value detector 16, an intrablock mean value detector 18, and delay circuits 201, 202, 203, and 204. An output MIN from the minimum value detector 14, an output MAX from the maximum value detector 16, an output m₀ from the mean value detector 18 are applied to encoders 205 and 206.

A comparator (COMPARISON) 207 compares each intrablock sample delayed by the delay circuit 201 with the mean value m₀ output from the mean value detector 18. If the delayed sample value is larger than the mean value m₀, the comparator 207 outputs a signal of logic "1". Otherwise, the comparator 207 outputs a signal of logic "0". A cluster ring memory 208 has a capacity of 16 bits and stores one-block comparison results from the comparator 207 such that one sample corresponds to one bit. If this bit is set at logic "1", the cluster ring memory 208 outputs a signal of "H" level as a gate pulse to selection circuits 210 and 211. Otherwise, the cluster ring memory 208 outputs a signal of "L" level to the selection circuits 210 and 211. A signal inverted by an inverter 209 is input to the selection circuit 210. That is, of all outputs from the delay circuit 202, the selection circuit 210 gates samples (subblock 1) having values smaller than the mean value m₀. However, of all the outputs from the delay circuit 203, the selection circuit 211 gates samples (subblock 2) having values larger than the mean value m₀. A mean value detector 212 detects a mean value m₁ of the samples within the subblock 1 and applies a detection signal to encoders 205 and 206. A mean value detector 213 detects a mean value m₂ of the samples within the subblock 2 and applies a detection signal to the encoders 205 and 206.

An output DT from the delay circuit 204 is directly applied to the encoder 206. It should be noted that the delay circuits 201 to 204 are connected to adjust timings. The encoder 206 forms a 3-bit index ID (per sample) from the input signals m₀, m₁, m₂, MIN, MAX, and DT. The index ID is applied to the encoder 205. The encoder 205 outputs a code series (to be described later) of each block onto a transmission line (not shown) from an output terminal 214.

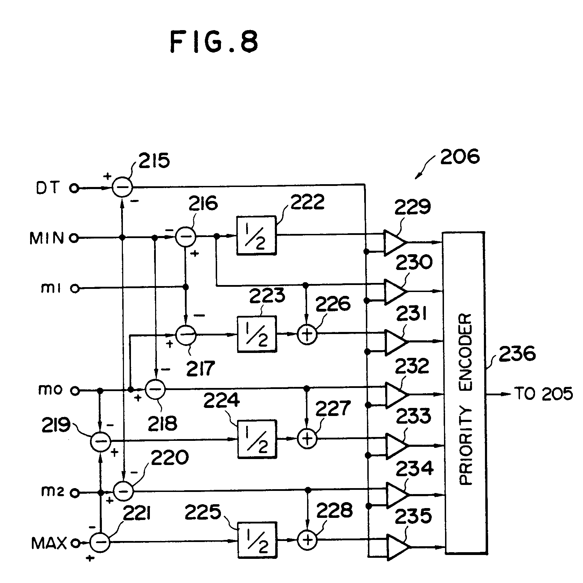

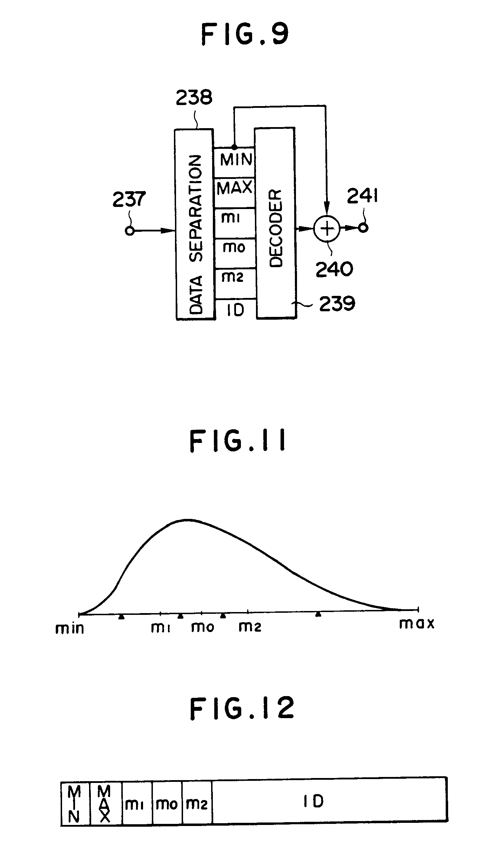

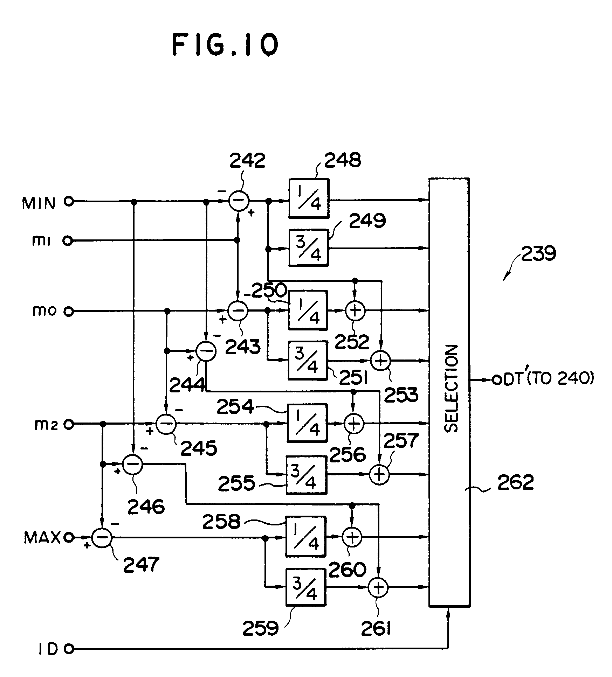

Fig. 8 is a detailed diagram of the encoder 206. In this embodiment, as shown in Fig. 11, a difference between the minimum value MIN and the mean value m₁, a difference between the mean values m₁ and m₀, a difference between the mean values m₀ and m₂, and a difference between the mean value m₂ and the maximum value MAX are divided into two areas each, thereby encoding the samples with a total of eight areas. Therefore, the index ID can have 3 bits for designating a correspondence between the area and the sample belonging thereto.

Referring to Fig. 8, a subtracter 215 subtracts the minimum value MIN from the sample value DT, a subtracter 216 subtracts the minimum value MIN from the mean value m₁, a subtracter 217 subtracts the mean value m₁ from the mean value m₀, a subtracter 218 subtracts the minimum value MIN from the mean value m₀, a subtracter 219 subtracts the mean value m₀ from the mean value m₂, a subtracter 220 subtracts the minimum value MIN from the mean value m₂, and a subtracter 221 subtracts the mean value m₂ from the maximum value MAX. Dividers 222, 223, 224, and 225 divide the outputs from the subtracters 216, 217, 219, and 221 into 1/2 values, respectively. An adder 226 adds an output from the subtracter 216 to an output from the divider 223. An adder 227 adds an output from the subtracter 218 to an output from the divider 224. An adder 228 adds an output from the subtracter 220 to an output from the divider 225. The output (1/2)(m₁ - MIN) from the divider 222, the output (m₁ - MIN) from the subtracter 216, the output (m₁ - MIN) + (1/2)(m₀ - m₁) from the adder 226, the output (m₀ - MIN) from the subtracter 218, the output (m₀ - MIN) + (1/2)(m₂ - m₀) from the adder 227, the output (m₂ - MIN) from the subtracter 220, and the output (m₂ - MIN) + (1/2)(MAX - m₂) from the adder 228 are added to the first input terminals of comparators 229 to 235. An output DT′ (= DT - MIN) is applied to the second input terminals of the comparators 229 to 235.

If outputs from the comparators 229 to 235 are defined as C1 to C7, the outputs C1 to C7 are given as follows:
(1) If 0 ≦ DT′< (1/2)(m₁ - MIN),
   C1 = C2 = C3 = C4 = C5 = C6 = C7 = 0
(2) If (1/2)(m₁ - MIN) ≦ DT′ < (m₁ - MIN),
   C1 = 1, C2 = C3 = C4 = C5 = C6 = C7 = 0
(3) If (m₁ - MIN) ≦ DT′ < (1/2)(m₀ - m₁) + (m₁ - MIN),
   C1 = C2 = 1, C3 = C4 = C5 = C6 = C7 = 0
(4) If (1/2)(m₀ - m₁) + (m₁ - MIN) ≦ DT′< (m₀ - MIN),
   C1 = C2 = C3 = 1, C4 = C5 = C6 = C7 = 0
(5) If (m₀ - MIN) ≦ DT′ < (1/2)(m₂ - m₀) - (m₀ - MIN),
   C1 = C2 = C3 = C4 = 1, C5 = C6 = C7 = 0
(6) If (1/2)(m₂ - m₀) + (m₀ - MIN) ≦ DT′ < (m₂ - MIN),
   C1 = C2 = C3 = C4 = C5 = 1, C6 = C7 = 0
(7) If (m₂ - MIN) < DT′ < (1/2)(MAX - m₂) + (m₂ - MIN),
   C1 = C2 = C3 = C4 = C5 = C6 = 1, C7 = 0
(8) If (1/2)(MAX - m₂) + (m₂ - MIN) ≦ DT′ < (MAX - MIN),
   C1 = C2 = C3 = C4 = C5 = C6 = C7 = 1

The priority encoder 236 outputs a 3-bit index ID, i.e., (000) for condition (1), (001) for condition (2), (010) for condition (3), (011) for condition (4), (100) for condition (5), (101) for condition (6), (110) for condition (7), and (111) for condition (8). This index ID is applied to the encoder 205.

As shown in Fig. 12, the encoder 205 outputs the data MIN, MAX, m₁, m₀, m₂, and ID as units of each block to an output terminal 214. In this embodiment as described above, the values MIN, MAX, m₁, m₀, and m₂ are given as 8-bit data, respectively, and the index ID is given as 3-bit data per sample. As compared with a case wherein all sample values are transmitted as 8-bit data, a higher compression ratio of 88/128 can be obtained.

Fig. 9 is a schematic diagram of a decoding apparatus corresponding to the encoding apparatus shown in Fig. 7. A digital television signal input from a transmission line (not shown) is input to a data separation circuit 238 through an input terminal 237 and is separated into the data MIN, MAX, m₀, m₁, m₂, and ID. These data are supplied to a decoder 239. An output from the decoder 239 represents a value corresponding to a difference between the actual pixel value and the MIN level within the block. The output from the decoder 239 is added to the minimum value MIN by an adder 240 so as to compensate for the MIN level. A sum signal from the adder 240 is output to an output terminal 241. Each pixel value appears at the output terminal 241.

Fig. 10 is a detailed diagram of the decoder 239 shown in Fig. 9. A subtracter 242 subtracts the minimum value MIN from the mean value m₁, a subtracter 243 subtracts the mean value m₁ from the mean value m₀, a subtracter 244 subtracts the minimum value MIN from the mean value m₀, a subtracter 245 subtracts the mean value m₀ from the mean value m₂, a subtracter 246 subtracts the minimum value MIN from the mean value m₂, and a subtracter 247 subtracts the mean value m₂ from the maximum value MAX. A divider 248 divides the output (m₁ - MIN) from the subtracter 242 to obtain a 1/4 value, and a divider 249 divides the output (m₁ - MIN) to obtain a 3/4 value. Dividers 250 and 251 divide the output (m₀ - m₁) from the subtracter 243 to obtain 1/4 and 3/4 values, respectively. An adder 252 adds an output from the subtracter 242 to an output from the divider 250. An adder 253 adds an output from the subtracter 242 to an output from the divider 251. A divider 254 divides an output (m₂ - m₀) from the subtracter 245 to obtain a 1/4 value, and a divider 255 divides this output to obtain a 3/4 value. An adder 256 adds the output (m₀ - MIN) from the subtracter 244 to an output from the divider 254. An adder 257 adds an output from the subtracter 244 to an output from the divider 255. A divider 258 divides an output (MAX - m₂) from the subtracter 247 to obtain a 1/4 value, and a divider 259 divides this output to obtain a 3/4 value. An adder 260 adds an output (m₂ - MIN) from the subtracter 246 to an output from the divider 258. An adder 261 adds an output from the subtracter 246 to an output from the divider 259.

A selection circuit 262 selects any one of the outputs from the dividers 248 and 249 and the adders 252, 253, 256, and 257 in accordance with the index ID. More specifically, the output from the selection circuit 262 is one of the inputs "(1/4)(m₁ - MIN)", "(3/4)(m₁ - MIN)", "(1/4)(m₀ - m₁) + (m₁ - MIN)", "(3/4)(m₀ - m₁) + (m₀ - MIN)", "(1/4)(m₂ - m₀) + (m₀ - MIN)", "(3/4)(m₂ - m₀) + (m₀ - MIN)", "(1/4)(MAX - m₂) + (m₂ - MIN)", and "(3/4)(MAX - m₂) + (m₂ - MIN)".
This output is applied to the adder 240 in Fig. 9.

According to this embodiment as described above, the digital television signal is encoded and transmitted in accordance with the distribution of levels of the sample values within the divided block. Therefore, even if a volume of information is small, encoding and transmission can be achieved with minimum image quality degradation.

In this embodiment, the index ID and the data MIN, MAX, m₀, m₁, and m₂ are transmitted. However, one of the values MIN and MAX and a dynamic range DR may be transmitted. The number of mean values m₀, m₁, and m₂ is not limited to three. The mean values m₀, m₁, and m₂ may be determined on the basis of a histogram of intrablock sample values.

According to the encoding apparatus of this embodiment, encoding is performed in consideration of the dynamic range and the distribution of the intrablock pixels. Therefore, even a pixel block including a boundary of an image can be transmitted without distortion.

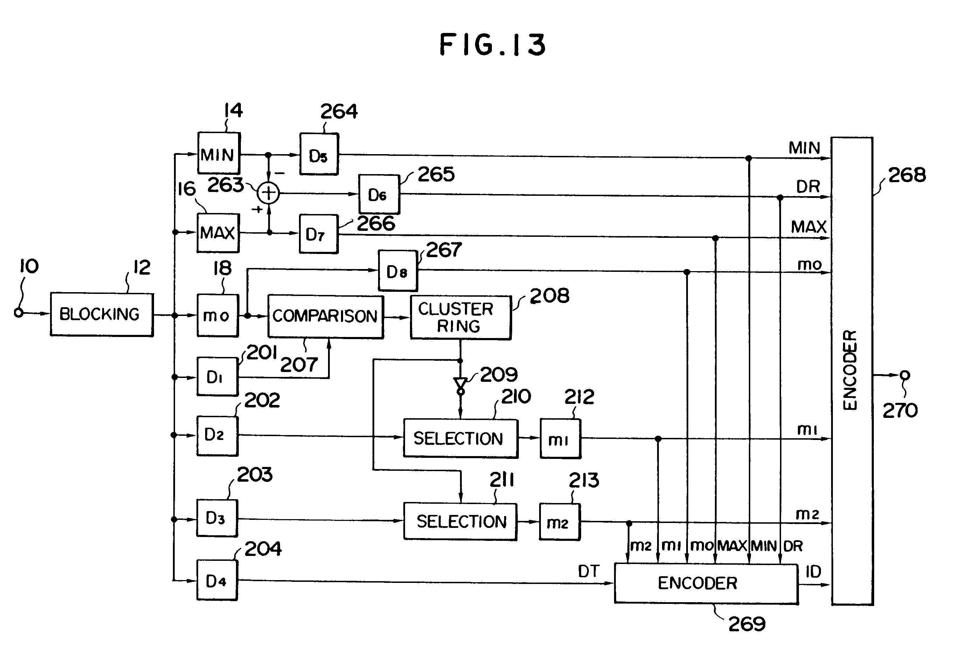

Fig. 13 is a block diagram of a television signal encoding apparatus according to a third embodiment of the present invention.

The same reference numerals as in Figs. 1 and 7 denote the same parts in Fig. 13, and a detailed description thereof will be omitted.

Referring to Fig. 13, the encoding apparatus includes an input terminal 10 for receiving a digital image signal and a blocking circuit 12.

A sample series rearranged by the blocking circuit 12 is applied to a minimum value detector 14, a maximum value detector 16, an intrablock mean value detector 18, and delay circuits 201, 202, 203, and 204. A subtracter 263 calculates a difference between a maximum value MAX detected by the maximum value detector 16 and a minimum value MIN detected by the minimum value detector 14. An output MIN from the minimum value detector 14, an output DR (= MAX - MIN) from the subtracter 263, an output MAX from the maximum value detector 16, and an output m₀ from the mean value detector 18 are applied to encoders 268 and 269 through delay circuits 264, 265, 266, and 267.

In the same manner as in the encoding apparatus shown in Fig. 7, a mean value m₁ of samples within a subblock 1 is applied from a mean value detector 48 to the encoders 268 and 269. A mean value m₂ of samples within a subblock 2 is applied from a mean value detector 50 to the encoders 268 and 269.

An output DT from the delay circuit 204 is directly applied to the encoder 269. It should be noted that the delay circuits 201 to 204 and the delay circuits 264 to 267 are connected to adjust timings. The encoder 269 generates an index ID (3 bits/sample) from the input signals m₀, m₁, m₂, MIN, MAX, DR, and DT. The 3-bit index ID is applied to the encoder 268. The encoder 268 outputs a code (to be described later) to a transmission line (not shown) from an output terminal 270.

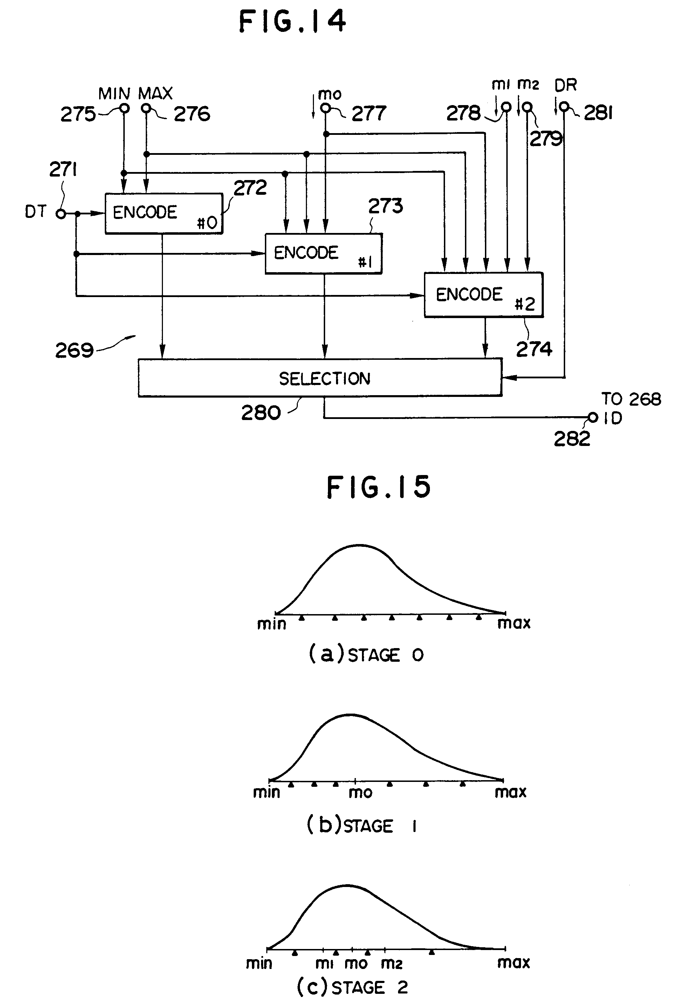

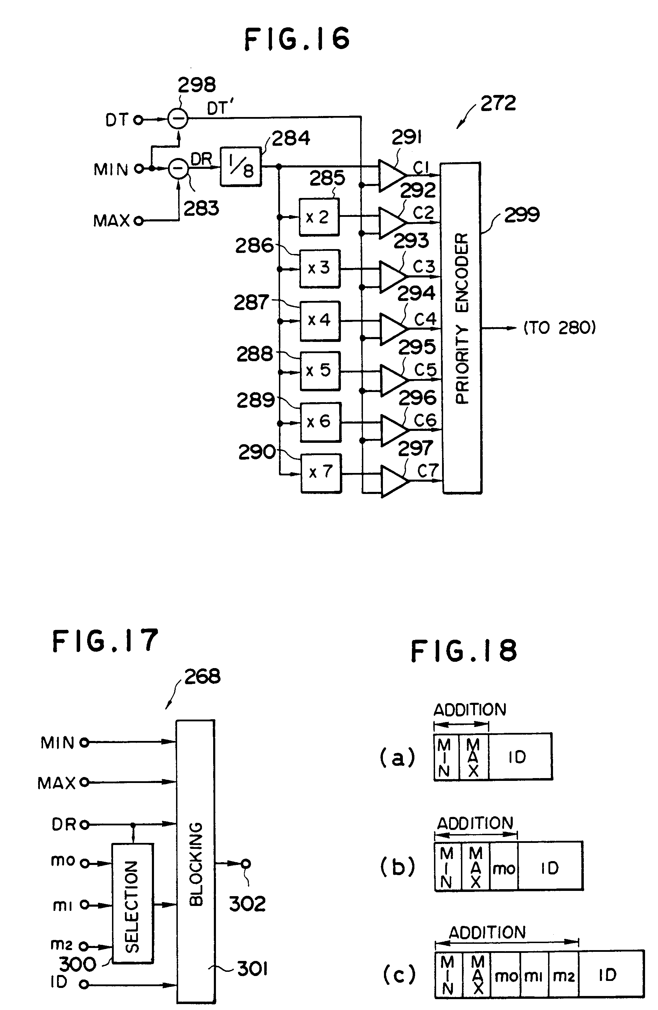

Fig. 14 is a detailed diagram of the encoder 269. The sample value DT input from an input terminal 271 is applied to encoders 272, 273, and 274. The data MIN and MAX input from input terminals 275 and 276 are applied to encoding elements (ENCODE) 272, 273, and 274. The data m₀ input from an input terminal 277 is applied to encoding elements 273 and 274, and the data m₁ and m₂ input from input terminals 278 and 279 are applied to an encoding element 274. In this embodiment, the encoding element 272 encodes the data DT in an operating mode (stage 0) for dividing the dynamic range into eight areas at equal intervals. The encoding element 273 encodes the data DT in an operating mode (stage 1) for dividing the difference between the values MIN and m₀ into four areas and the difference between the values m₀ and MAX into four areas (a total of eight areas). The encoding element 274 encodes the data DT in an operating mode (stage 2) for dividing the difference between the values MIN and m₁ into two areas, the difference between the values m₁ and m₀ into two areas, the difference between the values m₀ and m₂ into two areas and the difference between the values m₂ and MAX into two areas (a total of eight areas). The divided areas in stages 0, 1, and 2 are shown in Figs. 15(a) to 15(c), respectively. Each of the encoding elements 272, 273, and 274 outputs the index ID (3 bits/sample).

A selection circuit 280 compares the dynamic range DR of the sample value within each block with predetermined threshold values TH1 and TH2 (TH1 < TH2). If condition DR < TH1 is established, the selection circuit 280 selects an output from the encoding element 272; if TH1 ≦ DR < TH2, an output from the encoding element 273; and if TH2 ≦ DR, an output from the encoding element 274. The index ID selected by the selection circuit 280 is supplied to the encoder 268 (Fig. 13) through an output terminal 282.

Fig. 16 is a detailed diagram encoding element 272 shown in Fig. 14. A subtracter 283 subtracts the minimum value MIN from the maximum value MAX and outputs a signal representing the dynamic range DR. The dynamic range signal is divided by a divider 284 to obtain a 1/8 value thereof. This 1/8 value is supplied to a comparator 291 directly and to comparators 291 to 297 through multipliers 285 to 290. The multipliers 285 to 290 multiply the input signals with 2, 3,..., 7. A subtracter 298 subtracts the minimum value MIN from the sample value DT within the block, and the difference output DT′ is applied to the comparators 291 to 297. Comparison outputs C1 to C7 from the comparators 291 to 297 are supplied to a priority encoder 299. The outputs C1 to C7 are given in accordance with the output DT′ from a subtracter 298:
(1) If 0 ≦ DT′ < (1/8)DR,
   C1 = C2 = C3 = C4 = C5 = C6 = C7 = 0
(2) If (1/8)DR ≦ DT′ < (2/8)DR,
   C1 = 1, C2 = C3 = C4 = C5 = C6 = C7 = 0
(3) If (2/8)DR ≦ DT′ < (3/8)DR,
   C1 = C2 = 1, C3 = C4 = C5 = C6 = C7 = 0
(4) If (3/8)DR ≦ DT′ < (4/8)DR,
   C1 = C2 = C3 = 1, C4 = C5 = C6 = C7 = 0
(5) If (4/8)DR ≦ DT′ < (5/8)DR,
   C1 = C2 = C3 = C4 = 1, C5 = C6 = C7 = 0
(6) If (5/8)DR ≦ DT′ < (6/8)DR,
   C1 = C2 = C3 = C4 = C5 = 1, C6 = C7 = 0
(7) If (6/8)DR ≦ DT′ < (7/8)DR,
   C1 = C2 = C3 = C4 = C5 = C6 = 1, C7 = 0
(8) If (7/8)DR ≦ DT′ < DR,
   C1 = C2 = C3 = C4 = C5 = C6 = C7 = 1

The priority encoder 299 outputs a 3-bit code, i.e., (000) for condition (1), (001) for condition (2), (010) for condition (3), (011) for condition (4), (100) for condition (5), (101) for condition (6), (110) for condition (7), and (111) for condition (8). This output is applied to the selection circuit 280 (Fig. 14).

The coding element 273 shown in Fig. 14 has the same arrangement as the encoder 24 shown in Fig. 2. In this embodiment, the priority encoder 124 shown in Fig. 2 outputs the 3-bit index ID in the same manner as in the encoding element 272. The output is applied to the selection circuit 280 in Fig. 14.

The encoding element 274 shown in Fig. 14 has the same arrangement as that of the encoder 206 shown in Fig. 8. In this embodiment, the priority encoder 236 shown in Fig. 8 outputs the 3-bit index ID in the same manner as in the coding element 273. The output is applied to the selection circuit 280 shown in Fig. 14.

Fig. 17 is a detailed diagram showing an arrangement of the encoder 268 shown in Fig. 13. A selection circuit 300 does not generate any output if DR < TH1 (stage 0), and outputs m₀ if TH1 ≦ DR < TH2 (stage 1), and m₀, m₁, and m₂ if TH2 ≦ DR (stage 2) in accordance with the relationship between the dynamic range DR and the predetermined threshold values TH1 and TH2. In stage 0, a blocking circuit 301 outputs each input code series as a serial code series shown in Fig. 18(a) onto a transmission line (not shown). In stage 1, the blocking circuit 301 outputs each input code series as a serial code series shown in Fig. 18(b). In stage 2, the blocking circuit 301 outputs each input code series as a serial code series shown in Fig. 18(c).

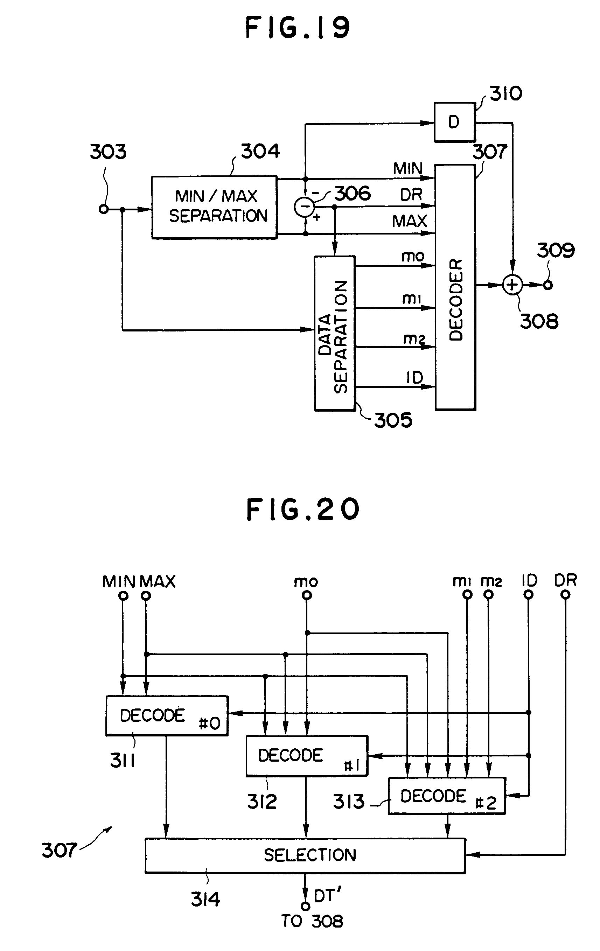

Fig. 19 is a schematic diagram of a digital television signal decoding apparatus corresponding to the encoding apparatus of Fig. 13 according to the present invention. A digital television signal input from a transmission line (not shown) is applied from an input terminal 303 to a MIN/MAX separation circuit 304 and a data separation circuit 305. The MIN/MAX separation circuit 304 separates the additional codes MIN and MAX from the input code series. A subtracter 306 calculates a difference DR (= MAX - MIN) between the separated codes MIN and MAX. The difference DR is applied to a decoder 307 and the data separation circuit 305. The data separation circuit 305 separates the data m₀, m₁, m₂, and ID from the input code series in accordance with the difference DR. The separated data are supplied to the decoder 307. The decoder 307 also receives the codes MAX and MIN from the MIN/MAX separation circuit 304. An output from the decoder 307 is obtained by removing the MIN level (to be described later). The output from the decoder 307 is added to the code MIN by an adder 308. Therefore, a decoded digital television signal appears at an output terminal 309. A delay circuit 310 serves as a time adjusting circuit.

Fig. 20 is a detailed diagram of the decoder 307 shown in Fig. 19. The decoder 307 includes a decoding element (DECODE) 311 for stage 0, a decoding element 312 for stage 1, and a decoding element 313 for stage 2. The data MIN, MAX, and ID are applied to the decoding element 311, the data MIN, MAX, ID, and m₀ are applied to the decoding element 312, and the data MIN, MAX, ID, m₀, m₁, and m₂ are applied to the decoding element 313. A selection circuit 314 selects one of the outputs from the decoding elements 311, 312, and 313 in accordance with the difference DR and the predetermined threshold values TH1 and TH2 (TH1 < TH2). This output is supplied to the adder 308 shown in Fig. 19.

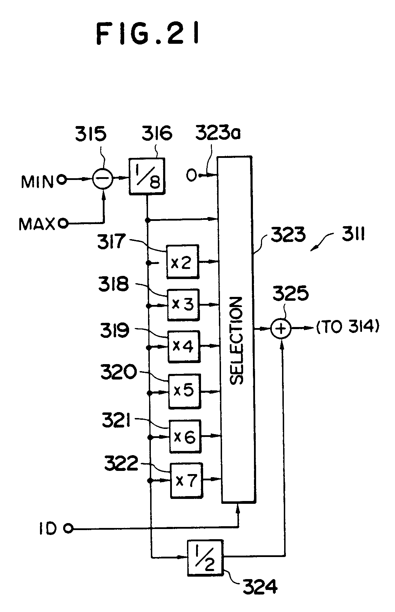

Fig. 21 is a detailed diagram of the decoding element 311 for stage 0. A subtracter 315 calculates a difference DR (= MAX - MIN) from the codes MIN and MAX, and the difference DR is supplied to a divider 316. The divider 316 divides the input to obtain a 1/8 value which is then applied to multipliers 317 to 322 and a selection circuit 323. The multipliers 317 to 322 multiply the input signals with 2, 3, 4, 5, 6, and 7, and the multiplied signals are applied to the selection circuit 323. Therefore, the selection circuit 323 receives each boundary value obtained by dividing the difference or dynamic range DR into eight areas. A selection circuit 323 also receives "0" from a terminal 323a. The selection circuit 323 selects one of "0", "(1/8)DR", "(2/8)DR", "(3/8)DR", "(4/8)DR", "(5/8)DR", "(6/8)DR", and "(7/8)DR" in accordance with the index ID. A divider 324 and an adder 325 are used to set a representative value. The divider 324 divides the output from the divider 316 to obtain a 1/2 value. The adder 325 adds the output selected by the selection circuit 323 to the output from the divider 324. An output from the adder 325 is supplied to the selection circuit 314 (Fig. 20).

The decoding element 312 for stage 1 shown in Fig. 20 has the same arrangement as that of the decoder 34 shown in Fig. 6. In this embodiment, the selection circuit 52 selects and outputs one of the inputs "(1/8)(m₀ - MIN)", "(3/8)(m₀ - MIN)", "(5/8)(m₀ - MIN)", "(7/8)(m₀ - MIN)", "(1/8)(MAX - m₀) + (m₀ - MIN)", "(3/8)(MAX - m₀) + (m₀ - MIN)", "(5/8)(MAX - m₀) + (m₀ - MIN)", and "(7/8)(MAX - m₀) + (m₀ - MIN)". The selected output is applied to the selection circuit 314 (Fig. 20).

The decoding element 313 for stage 2 shown in Fig. 20 has the same arrangement as that of the decoder 239 shown in Fig. 10. In this embodiment, the selection circuit 262 of Fig. 10 selects and outputs one of the inputs "(1/4) (m₁ - MIN)", " (3/4)(m₁ - MIN)", "(1/4) (m₀ - m₁) + (m₁ - MIN)", , (3/4)(m₀ - m₁) + (m₁ - MIN)", "(1/4) (m₂ - m₀) + (m₀ - MIN)", "(3/4) (m₂ - m₀) + (m₀ - MIN) ", (1/4) (MAX - m₂) + (m₂ - MIN)", and "(3/4) (MAX - m₂) + (m₂ - MIN)". The selected output is applied to the selection circuit 314 (Fig. 20).

According to this embodiment as described above, an appropriate operating mode is selected in accordance with a distribution of levels of sample values within each divided block, and the digital television signal is encoded and transmitted on the basis of the operating mode. Even if a volume of information is small, encoding and transmission can be performed with minimum image quality degradation. The operating mode of the transmitted data train can be accurately detected. Therefore, the original television signal can be appropriately encoded.

In this embodiment, the index ID and the values MIN, MAX, m₀, m₁, and m₂ are transmitted. However, the dynamic range DR may be transmitted with one of the values MIN and MAX. The number of mean values is not limited to three, i.e., m₀, m₁, and m₂. In addition, the mean values m₀, m₁, and m₂ may be determined on the basis of a histogram of sample values of each block.

According to this embodiment, an optimal encoding method is selected in consideration of the distribution of pixels within each block, and encoding is performed. Therefore, image quality degradation caused by encoding can be reduced during transmission.

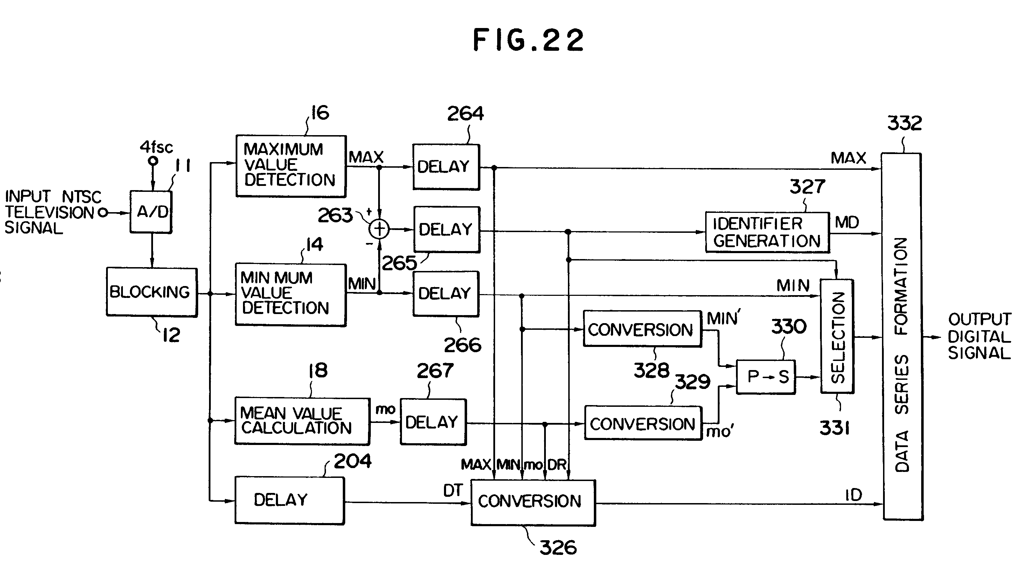

Fig. 22 is a block diagram of a television signal encoding apparatus according to a fourth embodiment of the present invention.

The same reference numerals as in Figs. 1, 7, and 13 denote the same parts in Fig. 22, and a detailed description thereof will be omitted.

Referring to Fig. 22, a television signal used in this embodiment complies with the NTSC scheme. An A/D converter 11 samples an NTSC television signal input from an input terminal at a sampling frequency which is four times a subcarrier frequency f_{SC} to produce a digital television signal (8 bits/sample). The digital television signals sequentially output from the A/D converter 11 are rearranged by a blocking circuit 12 in units of horizontal scanning lines. Each signal series is applied to a minimum value detector 14, a maximum value detector 16, an intrablock mean value detector 18, and a delay circuit 204. A subtracter 263 calculates a difference between a maximum value MAX detected by the maximum value detector 16 and a minimum value MIN detected by the minimum value detector 14. An output MIN from the minimum value detector 14, An output DR (= MAX - MIN) from the subtracter 263, An output MAX from the maximum value detector 16, and an output m₀ from the mean value detector 18 are applied to a converter (CONVERSION) 326 through delay circuits 264, 265, 266, and 267.

The converter 326 also receives the sample value DT formed by the A/D converter 11 and delayed by the delay circuit 204. The difference DR is quantized on the basis of the data MAX, MIN, DR, and m₀, and an index ID representing a correspondence of the difference DT and a given quantization step is output. This operation will be described in detail later. It should be noted that the delay circuits 264, 265, 266, and 267 are used to adjust timings of the sample value applied from the delay circuit 204 to the converter 326.

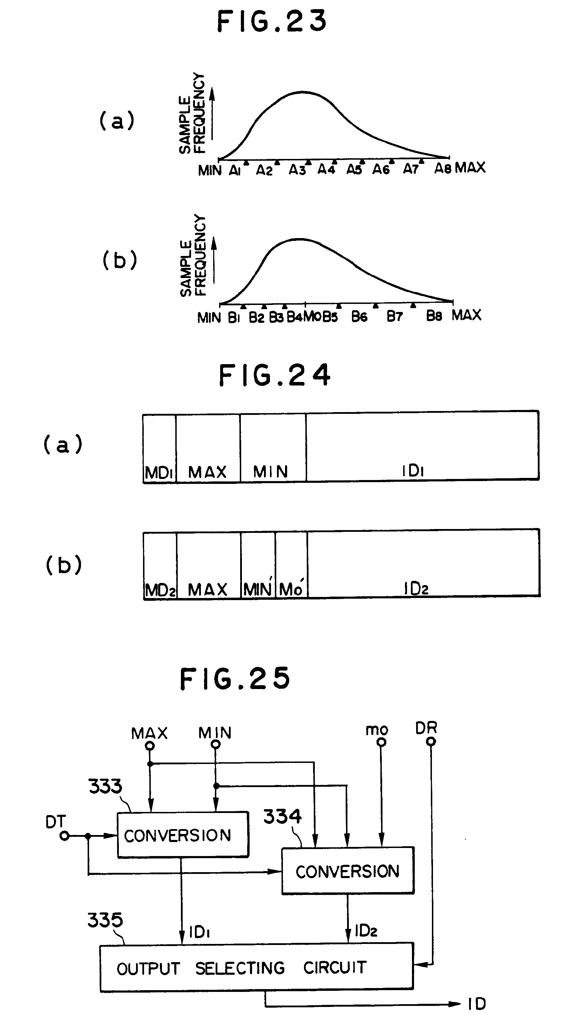

In this embodiment, the following method is employed as a method of encoding a digital television signal. In a first operating mode, the dynamic range DR of the sample values DT of one block is divided into eight areas as shown in Fig. 23(a). A 3-bit index ID₁ representing the correspondence between each sample value DT and a divided area of the dynamic range, and 8-bit data as the MAX and MIN data representing the dynamic range of each block are formed, and the data MAX, MIN, and ID₁ are output in place of the sample value DT. In a second operating mode, the dynamic range DR is divided into four regions at equal intervals, as shown in Fig. 23(b). A 3-bit index ID₂ representing a correspondence between each sample value DT and a divided area of the dynamic range, and 8-bit MAX data as information representing the dynamic range of each block, and 4-bit MIN and m₀ data are formed. The data MAX, MIN, m₀, and ID₂ are output in place of the sample value DT. The first and second operating modes are adaptively switched in accordance with the dynamic range DR.

An identifier generator (IDENTIFIER GENERATION) 327 receives the dynamic range DR and outputs an identifier for identifying the operating mode. More specifically, the data DR is compared with an operating mode selection threshold. If the data DR is smaller than the threshold value, an identifier MD₁ for designating the first operating mode is output. Otherwise, an identifier MD₂ for designating the second operating mode is output.

Converters (CONVERSION) 328 and 329 and a parallel/serial converter 330 are circuits operated upon selection of the second operating mode. More specifically, the converter 328 converts 8-bit MIN data into 4-bit MIN′ data. The converter 329 converts 8-bit m₀ data into 4-bit m₀′ data. The above conversion is performed using a memory table for outputting 4-bit data corresponding to the 8-bit input data. The parallel/serial converter 329 converts 4-bit signals from the converters 328 and 329 into a serial signal, i.e., an 8-bit signal. A selection circuit 331 selects the 8-bit MIN data from the delay circuit 266 in the first operating mode. However, in the second operating mode, the selection circuit 331 selects the 8-bit signal from the parallel/serial converter 330.

The MAX data from the delay circuit 264, the identifier data MD from the identifier generator 327, an output from the selection circuit 331, and the index ID from the converter 326 are applied to a data series formation circuit 332. The data series formation circuit 332 converts these input signals into a serial data series and outputs it. Fig. 24(a) shows an output data series in the first operating mode, and Fig. 24(b) shows an output data series in the second operating mode. In either operating mode, the lengths of the data series output from the data series formation circuit 332 are equal to each other and are given as a fixed length. When output data series is transmitted, recorded, or reproduced, its signal processing can be easily performed by a simple arrangement. In particular, special reproduction in recording/reproduction can be easily performed.

Fig. 25 is a detailed diagram of the converter 326. The input signals MIN, MAX, and DT are applied to conversion elements (CONVERSION) 333 and 334, and the mean value m₀ is applied to the conversion element (CONVERSION) 334. Outputs from the conversion elements 333 and 334 and the dynamic range DR are applied to an output selecting circuit 335. The conversion element 333 performs encoding in the first operating mode, and the conversion element 334 performs encoding in the second operating mode. The conversion elements 333 and 334 output 3-bit indices ID₁ and ID₂, respectively. The output selecting circuit 335 selects one of the outputs from the conversion elements 333 and 334 in accordance with the dynamic range DR under the same condition as in generation of the identifier in the identifier generator 327.

The conversion element 333 shown in Fig. 25 has the same arrangement as that of the encoding element 272 shown in Fig. 16. In this embodiment, the comparators 291 to 297 shown in Fig. 16 output the comparison results C1 to C7 to the priority encoder 299 in accordance with the output DT′ from the subtracter 298.

The outputs C1 to C7 are determined by the following conditions:
(1) If 0 ≦ DT′ < (1/8)DR,
   C1 = C2 = C3 = C4 = C5 = C6 = C7 = 0
(2) If (1/8)DR ≦ DT′ < (2/8)DR,
   C1 = 1, C2 = C3 = C4 = C5 = C6 = C7 = 0
(3) If (2/8)DR ≦ DT′ < (3/8)DR,
   C1 = C2 = 1, C3 = C4 = C5 = C6 = C7 = 0
(4) If (3/8)DR ≦ DT′ < (4/8)DR,
   C1 = C2 = C3 = 1, C4 = C5 = C6 = C7 = 0
(5) If (4/8)DR ≦ DT′ < (5/8)DR,
   C1 = C2 = C3 = C4 = 1, C5 = C6 = C7 = 0
(6) If (5/8)DR ≦ DT′ < (6/8)DR,
   C1 = C2 = C3 = C4 = C5 = 1, C6 = C7 = 0
(7) If (6/8)DR ≦ DT′ < (7/8)DR,
   C1 = C2 = C3 = C4 = C5 = C6 = 1, C7 = 0
(8) If (7/8)DR ≦ DT′ < DR,
   C1 = C2 = C3 = C4 = C5 = C6 = C7 = 1

Conditions (1), (2), (3), (4), (5), (6), (7), and (8) correspond to areas A₁, A₂, A₃, A₄, A₅, A₆, A₇, and A₈ shown in Fig. 23(a), respectively. The priority encoder 299 outputs each 3-bit index ID₁, i.e., (000) for condition (1), (001) for condition (2), (010) for condition (3), (011) for condition (4), (100) for condition (5), (101) for condition (6), (110) for condition (7), and (111) for condition (8) to the output selecting circuit 335 shown in Fig. 25.

The conversion element 333 shown in Fig. 25 has the same arrangement as the encoding element 24 in Fig. 2. In this embodiment, the comparators 110 to 123 shown in Fig. 2 output the comparison results C1 to C7 to the encoder 124 in accordance with the output DT′ from the subtracter 100.

The outputs C1 to C7 are determined by the following conditions.
(1) If 0 ≦ DT′< (1/4)(m₀ - MIN),
   C1 = C2 = C3 = C4 = C5 = C6 = C7 = 0
(2) If (1/4)(m₀ - MIN) ≦ DT′ < (2/4)(m₀ - MIN),
   C1 = 1, C2 = C3 = C4 = C5 = C6 = C7 = 0
(3) If (2/4)(m₀ - MIN) ≦ DT′ < (3/4)(m₀ - MIN),
   C1 = C2 = 1, C3 = C4 = C5 = C6 = C7 = 0
(4) If (3/4)(m₀ - MIN) ≦ DT′ < (m₀ - MIN),
   C1 = C2 = C3 = 1, C4 = C5 = C6 = C7 = 0
(5) If (m₀ - MIN) ≦ DT′ < (1/4)(MAX - m₀) + (m₀ - MIN),
   C1 = C2 = C3 = C4 = 1, C5 = C6 = C7 = 0
(6) If (1/4)(MAX - m₀) + (m₀ - MIN) ≦ DT′ < (2/4)(MAX - m₀) + (m₀ - MIN),
   C1 = C2 = C3 = C4 = C5 = 1, C6 = C7 = 0
(7) If (2/4)(MAX - m₀) + (m₀ - MIN) ≦ DT′< (3/4)(MAX - m₀) + (m₀ - MIN),
   C1 = C2 = C3 = C4 = C5 = C6 = 1, C7 = 0
(8) If (3/4)(MAX - m₀) + (m₀ - MIN) ≦ DT′ < (MAX - MIN),
   C1 = C2 = C3 = C4 = C5 = C6 = C7 = 1

Conditions (1), (2), (3), (4), (5), (6), (7), and (8) correspond to areas B₁, B₂, B₃, B₄, B₅, B₆, B₇, and B₈ shown in Figs. 23(b), respectively. The priority encoder 124 outputs a 3-bit index ID₂ in the same manner as in the conversion element 334 to the output selecting circuit 335 in Fig. 25.

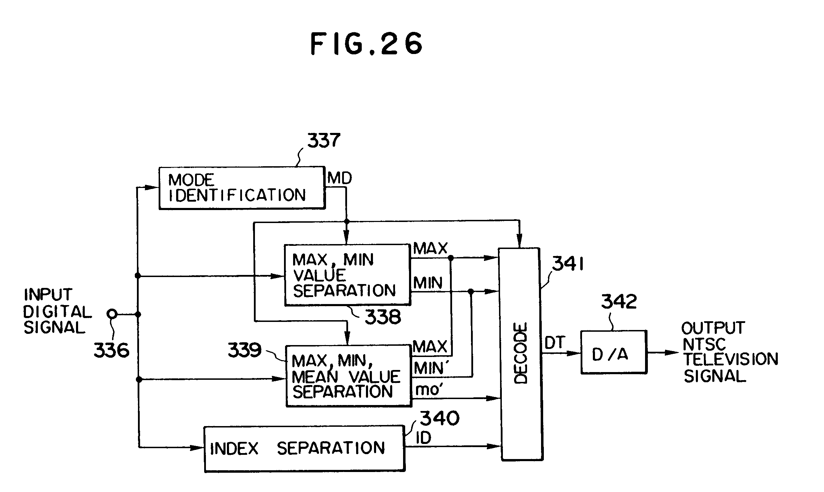

Fig. 26 is a schematic diagram of a digital television signal decoding apparatus corresponding to the encoding apparatus of Fig. 22. A digital television signal input from a transmission line (not shown) is applied to a mode identification circuit 337, a MAX/MIN separation circuit 338, a MAX/MIN/mean value separation circuit 339, and an index separation circuit 340. The mode identification circuit 337 separates a mode identifier MD. The MAX/MIN separation circuit 338 separates and outputs maximum and minimum values MAX and MIN when the identifier MD from the mode identification circuit 337 represents MD₁ (first operating mode). The MAX/MIN/mean value separation circuit 339 separates and outputs the maximum value , the 4-bit minimum value MIN′, and the 4-bit mean value m₀′ when the identifier MD from the mode identification circuit 337 represents MD₂ (second operating mode). The index separation circuit 340 separates and outputs an index portion. Since the data series supplied to each separation circuit has a fixed length, data separation operations can be easily performed. A clock generator (not shown) is arranged to separate the above data.

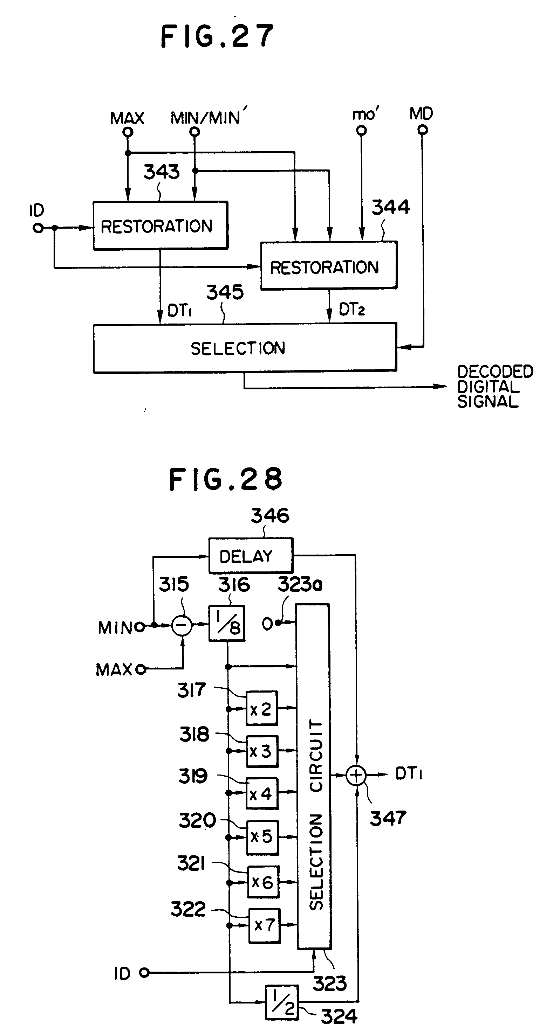

A decoding circuit (DECODE) 341 decodes the sample value DT from the data separated by the separation circuits 337, 338, 339, and 340, and the sample value DT is supplied to a D/A converter 342. The D/A converter 342 converts the decoded sample value DT into an analog signal in response to a sync signal having a sampling frequency of 4f_{SC}, thereby restoring and outputting the NTSC television signal. A detailed arrangement of the decoding circuit 341 is shown in Fig. 27. A restoration circuit 343 restores each sample value from the index ID₁ in the first operating mode. A restoration circuit 344 restores an encoded signal for restoring each sample value from the index ID₂ in the second operating mode. A selection circuit 345 selects an output DT₁ from the restoration circuit 343 or an output DT₂ from the restoration circuit 344 in accordance with the mode identifier MD.

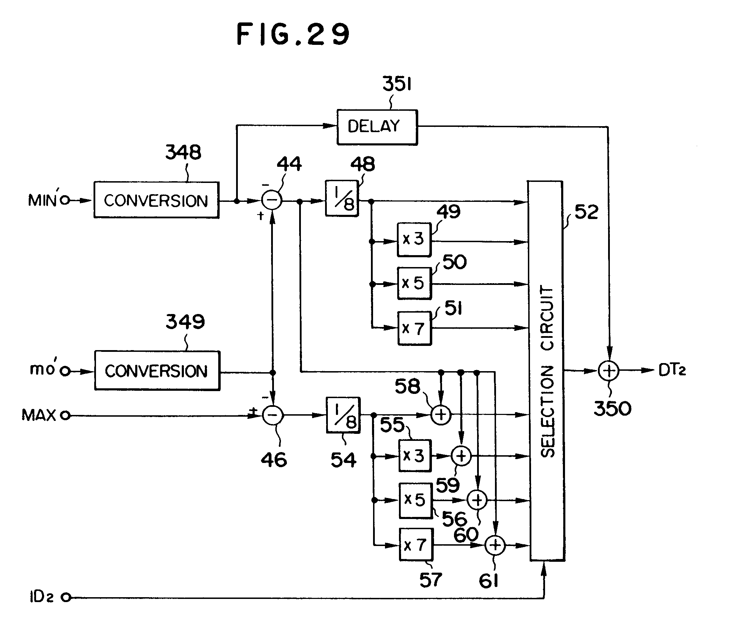

Fig. 28 is a diagram showing an arrangement of the restoration circuit 343 in Fig. 27. The same reference numerals as in the decoding element 311 of Fig. 21 denote the same parts in Fig. 28, and a detailed description thereof will be omitted.

As shown in Fig. 28, an adder 347 adds an output from a selection circuit 323 to an output from a divider 324. The adder 347 further adds the MIN data from the delay circuit 346 to the above sum. The delay circuit 346 is arranged to adjust timings. An output from the adder 347 is supplied as a restored sample value DT₁ to the selection circuit 345 of Fig. 27.

Fig. 29 is a diagram showing an arrangement of the restoration circuit 344 in Fig. 27. The same reference numerals as in the decoder 34 of Fig. 6 denote the same parts in Fig. 29, and a detailed description thereof will be omitted.

Referring to Fig. 29, a converter (CONVERSION) 348 comprises a memory table or the like and converts the 4-bit MIN′ data into 8-bit MIN data. The converted data is supplied to a subtracter 44 and a delay circuit 351 (to be described later). A converter 349 comprises a memory table or the like and converts 4-bit m₀′ data into 8-bit m₀ data which is then supplied to subtracters 44 and 46.

In this embodiment, an output from the selection circuit 52 is applied to an adder 350. The data MIN is applied to the adder 350 through a delay circuit 351. A sum signal is supplied as a restored sample value DT₂ to the selection circuit 345 in Fig. 27.

According to this embodiment as described above, a television signal as a kind of image information is selectively encoded in the two operating modes. Even if a volume of information is small, encoding and transmission can be performed with minimum image quality degradation. When the television signal is selectively encoded in the two operating modes, the unit code length of the resultant data series is kept unchanged regardless of different operating modes. In addition, even if data series obtained in the two operating modes are mixed, the operating mode for the transmitted data series can be accurately discriminated, and the transmitted data series can be accurately decoded to the original signal.

The present invention is exemplified by encoding and transmission of the NTSC television signal. However, the present invention is not limited to this. The present invention is also applicable to an encoding/transmitting apparatus of a PAL or SECAM scheme, and an apparatus for transmitting an image signal except for the television signal, e.g., a facsimile signal to obtain the same effects as in the present invention.

## Claims

1. An image encoding apparatus comprising:
blocking means (12) for dividing pixels of an image to be encoded into a plurality of pixel blocks;
means (14 and 16) for identifying a dynamic range of the pixel values in each block;
means (100-123) for determining a set of quantisation levels for the block dependent on the identified dynamic range;
means (124) for encoding the individual pixel values of the block in accordance with the quantisation levels; and
means (22) for generating output data including the encoded pixel values for the block together with reference value data representing the identified dynamic range for the block,
characterised in that the determination of the quantisation levels for at least some blocks is further adapted in accordance with the distribution of pixel values within the dynamic range and in that the output data includes distribution state data characterising said distribution so as to permit decoding in a correspondingly adapted manner.

2. An apparatus according to claim 1, wherein the reference value data encodes a minimum and maximum value for the pixel data of each block.

3. An apparatus according to claim 1 or 2, further comprising means (18) for calculating a mean value of the pixel data in the block, which mean value is encoded within the distribution state data.

4. An apparatus according to claim 3, wherein the means (100-123) for determining the set of quantisation levels for the block divides a sub-range between the minimum and the mean value of the block into a predetermined number of steps, and divides a sub-range between the mean value and the maximum value for the block into a predetermined number of steps.

5. An apparatus according to claim 3, further comprising means (207-213) for calculating a first sub-mean value which is the mean of the pixel values in the block which are less than the calculated mean value, and a second sub-mean value which is the mean of the pixel values in the block which are greater than the calculated mean value.

6. An apparatus according to claim 5, wherein the mean value for the block and the first and second sub-mean values divide the dynamic range for the block into four sub-ranges, and wherein the means (100-123) for determining the set of quantisation levels divides each of the four sub-ranges into a predetermined number of quantisation steps, and wherein the distribution state data encodes the first and second sub-mean values.

7. An apparatus according to any of claims 1 to 6, wherein the maximum pixel value of the block and a dynamic range value are included in the reference value data to encode the dynamic range for the block.

8. An apparatus according to any one of claims 1 to 6, wherein the minimum pixel value and a dynamic range value of the block are included in the reference value data to encode the dynamic range of pixel values in the block.

9. An apparatus according to any preceding claim, wherein for selected blocks the manner of encoding pixel values is not adapted to the distribution of pixel values within the dynamic range.

10. An apparatus according to claim 9, wherein said selected blocks are selected in dependence on the calculated dynamic range.

11. An apparatus according to claim 9 or 10, wherein for said selected blocks the means (100-123) for determining the set of quantisation levels divides the dynamic range into a predetermined number of quantisation steps, while for other blocks, a number of sub-ranges of the dynamic range are defined in accordance with the distribution of pixel values within the dynamic range and each sub-range is divided into a predetermined number of quantisation steps.

12. An apparatus according to claim 11, wherein for said other blocks the dynamic range is divided into either two or four sub-ranges, depending on the dynamic range for the block.

13. An apparatus according to any of claims 9 to 12, wherein mode designation data are included in the output data, to indicate whether the quantisation levels for each block are or are not adapted to the distribution of pixel values within the dynamic range of the block.

14. An apparatus according to any of claims 9 to 13, wherein the output data length per block of the image is constant, irrespective of whether the manner of encoding that block is adapted to the distribution of pixel values within the dynamic range of the block.

15. An apparatus according to claim 14, wherein for a block whose encoding is adapted to the distribution of pixel values within the dynamic range, at least a part of the reference value data for the block is encoded with a lower precision than that used in the reference value data of a block whose encoding is not adapted to the distribution of pixel values so as to maintain the said constant code length despite the presence of distribution state data.

16. An apparatus for decoding image data encoded by an apparatus according to any of claims 1 to 15, comprising: means for separating from received data individual encoded pixel data for a block of pixels from reference value data encoding a dynamic range of pixel values within that block; means for identifying a set of quantisation levels used in the encoding of the individual pixel values; and means for decoding the individual pixel values of the block in accordance with the identified quantisation levels, characterised in that the received data for at least some blocks may include distribution state data characterising the distribution of quantisation levels within the encoded dynamic range.

17. A signal including image data which have been encoded by an apparatus as claimed in any of claims 1 to 15, the image data including at least for some blocks of pixels distribution state data in addition to reference value data.

## Patentansprüche

1. Bildkodiereinrichtung mit:
einer Blockbildungseinrichtung (12) zum Aufteilen von Bildelementen eines zu kodierenden Bildes in eine Vielzahl von Bildelementblöcken,
einer Einrichtung (14, 16) zum Identifizieren eines Dynamikbereichs der Bildelementwerte in jedem Block,
einer Einrichtung (100 - 123) zum Bestimmen einer Gruppe von Quantisierungsschritten für den Block in Abhängigkeit von dem identifizierten Dynamikbereich,
einer Einrichtung (124) zum Kodieren der einzelnen Bildelementwerte des Blockes entsprechend den Quantisierungsschritten und
einer Einrichtung (22) zum Erzeugen von Ausgabedaten einschließlich der kodierten Bildelementwerte für den Block zusammen mit Bezugswert-Daten, die den identifizierten Dynamikbereich für den Block darstellen,
**dadurch gekennzeichnet, daß**
die Bestimmung der Quantisierungsschritte für zumindest einige Blöcke außerdem entsprechend der Verteilung der Bildelementwerte innerhalb des Dynamikbereichs angepaßt wird, und daß
die Ausgabedaten Verteilungszustand-Daten enthalten, die die Verteilung kennzeichnen, damit eine Dekodierung auf eine entsprechend angepaßte Weise ermöglicht wird.

2. Bildkodiereinrichtung nach Anspruch 1,
**dadurch gekennzeichnet, daß**
die Bezugswert-Daten einen Mindest- und einen Höchstwert für die Bildelement-Daten jedes Blockes kodieren.

3. Bildkodiereinrichtung nach Anspruch 1 oder 2,
**gekennzeichnet durch**
eine Einrichtung (18) zum Berechnen eines Mittelwerts der Bildelement-Daten in dem Block, wobei der Mittelwert innerhalb der Verteilungszustand-Daten kodiert ist.

4. Bildkodiereinrichtung nach Anspruch 3,
**dadurch gekennzeichnet, daß**
die Einrichtung (100 - 123) zum Bestimmen der Gruppe von Quantisierungsschritten für den Block einen Unterbereich zwischen dem Mindest- und dem Mittelwert des Blockes in eine vorbestimmte Anzahl von Stufen aufteilt und
einen Unterbereich zwischen dem Mittel- und dem Höchstwert für den Block in eine vorbestimmte Anzahl von Stufen aufteilt.

5. Bildkodiereinrichtung nach Anspruch 3,
**gekennzeichnet durch**
eine Einrichtung (207 - 213) zum Berechnen eines ersten Unter-Mittelwertes, der der Mittelwert der Bildelementwerte in dem Block ist, die geringer als der berechnete Mittelwert sind, und eines zweiten Unter-Mittelwertes, der der Mittelwert der Bildelemente in dem Block ist, die größer als der berechnete Mittelwert sind.

6. Bildkodiereinrichtung nach Anspruch 5,
**dadurch gekennzeichnet, daß**
der Mittelwert für den Block und der erste und zweite Unter-Mittelwert den Dynamikbereich für den Block in vier Unterbereiche aufteilen,
die Einrichtung (100 - 123) zum Bestimmen der Gruppe von Quantisierungsschritten jeden der vier Unterbereiche in eine vorbestimmte Anzahl von Quantisierungsstufen aufteilt, und
die Verteilungszustand-Daten den ersten und zweiten Unter-Mittelwert kodieren.

7. Bildkodiereinrichtung nach einem der Ansprüche 1 bis 6,
**dadurch gekennzeichnet, daß**
der Höchst-Bildelementwert des Blockes und ein Dynamikbereichwert in den Bezugswert-Daten zum Kodieren des Dynamikbereichs für den Block enthalten sind.

8. Bildkodiereinrichtung nach einem der Ansprüche 1 bis 6,
**dadurch gekennzeichnet, daß**
der Mindest-Bildelementwert und ein Dynamikbereichwert des Blockes in den Bezugswert-Daten zum Kodieren des Dynamikbereichs der Bildelementwerte in dem Block enthalten sind.

9. Bildkodiereinrichtung nach einem der vorangehenden Ansprüche,
**dadurch gekennzeichnet, daß**
für ausgewählte Blöcke die Weise der Kodierung von Bildelementwerten nicht an die Verteilung von Bildelementwerten innerhalb des Dynamikbereichs angepaßt ist.

10. Bildkodiereinrichtung nach Anspruch 9,
**dadurch gekennzeichnet, daß**
die ausgewählten Blöcke in Abhängigkeit des berechneten Dynamikbereichs ausgewählt sind.

11. Bildkodiereinrichtung nach Anspruch 9 oder 10,
**dadurch gekennzeichnet, daß**
für die ausgewählten Blöcke die Einrichtung (100 - 123) zum Bestimmen der Gruppe von Quantisierungsschritten den Dynamikbereich in eine vorbestimmte Anzahl von Quantisierungsstufen aufteilt, während für andere Blöcke eine Anzahl von Unterbereichen des Dynamikbereichs entsprechend der Verteilung von Bildelementwerten innerhalb des Dynamikbereichs definiert und jeder Unterbereich in eine vorbestimmte Anzahl von Quantisierungsstufen aufgeteilt ist.

12. Bildkodiereinrichtung nach Anspruch 11,
**dadurch gekennzeichnet, daß**
für die anderen Blöcke der Dynamikbereich in entweder zwei oder vier Unterbereiche in Abhängigkeit des Dynamikbereichs des Blockes aufgeteilt ist.

13. Bildkodiereinrichtung nach einem der Ansprüche 9 bis 12,
**dadurch gekennzeichnet, daß**
Betriebsart-Bestimmungsdaten in den Ausgabedaten zum Anzeigen enthalten sind, ob die Quantisierungsschritte für jeden Block an die Verteilung von Bildelementwerten innerhalb des Dynamikbereichs des Blockes angepaßt sind oder nicht.

14. Bildkodiereinrichtung nach einem der Ansprüche 9 bis 13,
**dadurch gekennzeichnet, daß**
die Ausgabedatenlänge pro Block des Bildes unabhängig davon konstant ist, ob die Weise der Kodierung dieses Blocks an die Verteilung von Bildelementwerten innerhalb des Dynamikbereiches des Blocks angepaßt ist.

15. Bildkodiereinrichtung nach Anspruch 14,
**dadurch gekennzeichnet, daß**
für einen Block, dessen Kodierung an die Verteilung von Bildelementwerten innerhalb des Dynamikbereichs angepaßt ist, zumindest ein Teil der Bezugswert-Daten für den Block mit einer geringeren Genauigkeit als der kodiert ist, die bei den Bezugswert-Daten eines Blockes verwendet wird, dessen Kodierung nicht an die Verteilung von Bildelementwerten angepaßt ist, damit die konstante Codelänge trotz des Vorhandenseins von Verteilungszustand-Daten erhalten wird.

16. Einrichtung zum Dekodieren von durch eine Einrichtung nach einem der Ansprüche 1 bis 15 kodierten Bilddaten mit:
einer Einrichtung zum Trennen einzelner kodierter Bildelementdaten für einen Block von Bildelementen aus empfangenen Daten von Bezugswert-Daten, die einen Dynamikbereich von Bildelementwerten innerhalb dieses Blockes kodieren,
einer Einrichtung zum Identifizieren einer Gruppe von Quantisierungsschritten, die bei der Kodierung der einzelnen Bildelementwerte verwendet werden, und
einer Vorrichtung zum Dekodieren der einzelnen Bildelementwerte des Blockes entsprechend den identifizierten Quantisierungsschritten,
**dadurch gekennzeichnet, daß**
die empfangenen Daten für zumindest einige Blöcke Verteilungszustand-Daten enthalten können, die die Verteilung von Quantisierungsschritten innerhalb des kodierten Dynamikbereichs kennzeichnen.

17. Signal einschließlich Bilddaten, die durch eine Einrichtung nach einem der Ansprüche 1 bis 15 kodiert worden sind, wobei die Bilddaten zumindest für einige Blöcke von Bildelementen Verteilungszustand-Daten zusätzlich zu Bezugswert-Daten enthalten.

## Revendications

1. Appareil de codage d'image comprenant:
un moyen de blocage (12) pour diviser des pixels d'une image à coder en une pluralité de blocs de pixels;
des moyens (14 et 16) pour identifier une plage dynamique des valeurs de pixels dans chaque bloc;
des moyens (100-123) pour déterminer une série de niveaux de quantification pour le bloc en fonction de la plage dynamique identifiée;
un moyen (124) pour coder les valeurs de pixels individuelles du bloc en fonction des niveaux de quantification; et
un moyen (22) pour générer des données de sortie incluant les valeurs de pixel codées pour le bloc avec des données de valeur de référence représentant la plage dynamique identifiée pour le bloc,
caractérisé en ce que la détermination des niveaux de quantification pour au moins certains blocs est en outre adaptée conformément à la répartition des valeurs de pixels à l'intérieur de la plage dynamique et en ce que les données de sortie comportent des données d'état de répartition caractérisant ladite répartition de manière à permettre le décodage d'une manière adaptée correspondante.

2. Appareil selon la revendication 1, dans lequel les données de valeur de référence codent une valeur minimum et maximum pour les données de pixels de chaque bloc.

3. Appareil selon la revendication 1 ou 2, comprenant en outre un moyen (18) pour calculer une valeur moyenne des données de pixels dans le bloc, cette valeur moyenne étant codée à l'intérieur des données d'état de répartition.

4. Appareil selon la revendication 3, dans lequel les moyens (100-123) pour déterminer la série de niveaux de quantification pour le bloc divisent une sous-plage entre le minimum et la valeur moyenne du bloc en un nombre prédéterminé d'étapes, et divisent une sous-plage entre la valeur moyenne et la valeur maximum pour le bloc en un nombre prédéterminé d'étapes.

5. Appareil sleon la revendication 3, comprenant en outre des moyens (207-213) pour calculer une première valeur sous-moyenne qui est la moyenne des valeurs de pixels dans le bloc qui sont inférieures à la valeur moyenne calculée, et une seconde valeur sous-moyenne qui est la moyenne des valeurs de pixels dans le bloc qui sont supérieures à la valeur moyenne calculée.

6. Appareil selon la revendication 5, dans lequel la valeur moyenne pour le bloc et les première et seconde valeurs sous-moyennes divisent la plage dynamique pour le bloc en quatre sous-plages, dans lequel les moyens (100-123) pour déterminer la série de niveaux de quantification divisent chacune des quatre sous-plages en un nombre prédéterminé d'étapes de quantification, et dans lequel les données d'état de répartition codent les première et seconde valeurs sous-moyennes.

7. Appareil selon l'une quelconque des revendications 1 à 6, dans lequel la valeur de pixel maximum du bloc et une valeur de plage dynamique sont incluses dans les données de valeur de référence pour coder la plage dynamique pour le bloc.

8. Appareil selon l'une quelconque des revendications 1 à 6, dans lequel la valeur de pixel minimum et une valeur de plage dynamique du bloc sont incluses dans les données de valeur de référence pour coder la plage dynamique des valeurs de pixels dans le bloc.

9. Appareil selon l'une quelconque des revendications précédentes, dans lequel, pour des blocs sélectionnés, la manière de coder des valeurs de pixels n'est pas adaptée à la répartition des valeurs de pixels à l'intérieur de la plage dynamique.

10. Appareil selon la revendication 9, dans lequel lesdits blocs sélectionnés sont sélectionnés en fonction de la plage dynamique calculée.

11. Appareil selon la revendication 9 ou 10, dans lequel, pour lesdits blocs sélectionnés, les moyens (100-123) pour déterminer la série de niveaux de quantification divisent la plage dynamique en un nombre prédéterminé d'étapes de quantification, tandis que pour d'autres blocs, un certain nombre de sous-plages de la plage dynamique sont définies en fonction de la répartition des valeurs de pixels à l'intérieur de la plage dynamique et chaque sous-plage est divisée en un nombre prédéterminé d'étapes de quantification.

12. Appareil selon la revendication 11, dans lequel, pour lesdits autres blocs, la plage dynamique est divisée en deux ou quatre sous-plages, en fonction de la plage dynamique pour le bloc.

13. Appareil selon l'une quelconque des revendications 9 à 12, dans lequel des données de désignation de mode sont incluses dans les données de sortie, pour indiquer si les niveaux de quantification pour chaque bloc sont ou ne sont pas adaptés à la répartition des valeurs de pixels à l'intérieur de la plage dynamique du bloc.

14. Appareil selon l'une quelconque des revendications 9 à 13, dans lequel la longueur des données de sortie par bloc d'image est constante, quelle que soit la manière dont le codage de ce bloc est adapté à la répartition des valeurs de pixels à l'intérieur de la plage dynamique du bloc.

15. Appareil selon la revendication 14, dans lequel, pour un bloc dont le codage est adapté à la répartition des valeurs de pixels dans la plage dynamique, au moins une partie des données de valeur de référence pour le bloc est codée avec une précision inférieure à celle utilisée dans les données de valeur de référence d'un bloc dont le codage n'est pas adapté à la répartition des valeurs de pixels de manière à maintenir ladite longueur de code constante malgré la présence de données d'état de répartition.

16. Appareil pour décoder des données d'image codées par un appareil selon l'une quelconque des revendications 1 à 15, comprenant: un moyen pour séparer des données reçues des données de pixels codées individuelles pour un bloc de pixels à partir de données de valeur de référence codant une plage dynamique de valeurs de pixels à l'intérieur de ce bloc; un moyen pour identifier une série de niveaux de quantification utilisés dans le codage des valeurs de pixels individuelles; et un moyen pour décoder les valeurs de pixels individuelles du bloc en fonction des niveaux de quantification identifiés, caractérisé en ce que les données reçues, pour au moins certains blocs, peuvent inclure des données d'état de répartition caractérisant la répartition des niveaux de quantification à l'intérieur de la plage dynamique codée.

17. Signal comportant des données d'image qui ont été codées par un appareil selon l'une quelconque des revendications 1 à 15, les données d'image incluant, au moins pour certains blocs de pixels, des données d'état de répartition en plus de données de valeur de référence.
